# EUROPÄISCHE PATENTSCHRIFT

(11) **EP 4 101 040 B1**
(45) Veröffentlichungstag und Bekanntmachung des Hinweises auf die Patenterteilung: **04.03.2026**
(21) Anmeldenummer: 21702637.6
(22) Anmeldetag: 28.01.2021
(51) Int. Cl.: H02G 3/04, F16L 3/015, H02G 11/00, F16G 13/16

(54) **LEITUNGSFÜHRUNGSSYSTEM MIT VEREINFACHTER FÜHRUNGSVORRICHTUNG ZUR QUERSTABILISIERUNG UND ANBAUMODUL HIERFÜR**
LINE-GUIDING SYSTEM HAVING A SIMPLIFIED GUIDING DEVICE FOR TRANSVERSE STABILIZATION, AND ADD-ON MODULE THEREFOR
SYSTÈME DE GUIDAGE DE CONDUITE DOTÉ D'UN DISPOSITIF DE GUIDAGE SIMPLIFIÉ POUR STABILISATION TRANSVERSALE, ET SON MODULE COMPLÉMENTAIRE

(30) Priorität: 04.02.2020 DE 202020100606 U
(43) Veröffentlichungstag der Anmeldung: 14.12.2022
(73) Patentinhaber: igus SE & Co. KG, 51147 Köln (DE)
(72) Erfinder: HERMEY, Andreas, 53773 Hennef (DE); DOMMNIK, Jörg, 53819 Neunkirchen-Seelscheid (DE)
(74) Vertreter: Lippert Stachow Patentanwälte Rechtsanwälte
(86) Internationale Anmeldenummer: PCT/EP2021/052045
(87) Internationale Veröffentlichungsnummer: WO 2021/156141

(56) Entgegenhaltungen:
- DE-U1- 202012 010 236
- DE-U1- 29 607 228
- DE-U1- 29 904 796
- "Sparen auf langen Verfahrwegen, selbstführende e-keten", 7 November 2016 (2016-11-07), pages 968 - 997, XP009526874, Retrieved from the Internet <URL:https://www.igus.de/iProsvc/Download.aspx?File=P01100900DEde.pdf&Name=Serie%2520AG200.pdf>

## Beschreibung

Die Erfindung betrifft ein Leitungsführungssystem umfassend eine Leitungsführungseinrichtung zum Führen von Versorgungsleitungen sowie eine separate Führungsvorrichtung zum Führen der Leitungsführungseinrichtung. Die Leitungsführungseinrichtung führt dabei die Leitungen, wie z.B. Kabel, Schläuche oder dergleichen, von einer ersten zu einer zweiten Anschlussstelle, von denen mindestens eine Anschlussstelle entlang eines Verfahrweges relativ zur anderen verfahrbar ist. Die separate Führungsvorrichtung andererseits dient zum Führen der Leitungsführungseinrichtung entlang zumindest einer Teilstrecke des Verfahrweges.

Unter der Leitungsführungseinrichtung wird vorliegend eine Leitungsführungseinrichtung zum dynamischen Führen von Versorgungsleitungen, um einen beweglichen Verbraucher mit Energie und Prozessmedien zu versorgen, verstanden. Eine Leitungsführungseinrichtung dieser Art ist typisch gelenkig ausgebildet, sodass die Leitungsführungseinrichtung umgeschlagen bzw. umgelenkt werden kann, um zwei gegenüberliegende Trume - einen ersten und einen zweiten Trum - und einen diese verbindenden Umlenkbogen zu bilden. Beim Verfahren ist der die Trume verbindende Umlenkbogen verfahrbar zwischen den Enden der Leitungsführungseinrichtung bzw. deren Anschlussstellen. Der Umlenkbogen ist dabei um eine Umlenkachse gekrümmt, wobei die Umlenkachse in einer Querrichtung quer zur Längsrichtung verläuft. Die Längsrichtung entspricht der Richtung der Längserstreckung eines Trums. Einer der Trume ist typischerweise ruhend und der andere verfahrbar.

Die erfindungsgemäße Leitungsführungseinrichtung ist eine an sich bekannte Energieführungskette.

Um einem Abweichen vom gewünschten Verfahrweg, insbesondere bei langen Verfahrwegen, entgegenzuwirken, können gattungsgemäße Systeme wiederum mit separaten Führungsvorrichtungen zum Führen der Leitungsführungseinrichtung selbst entlang zumindest einer Teilstrecke des Verfahrweges ausgestattet werden.

Hierzu sind bereits unterschiedliche Führungsvorrichtungen bekannt, die bspw. als Führungsrinnen mit parallelen in einer Längsrichtung verlaufenden Seitenwänden ausgeführt sind. Bei Führungsrinnen werden ein oder beide Trume einer Leitungsführungseinrichtung, insbesondere einer Energieführungskette, zwischen den Seitenwänden aufgenommen und geführt. Bspw. beschreibt DE29607228U1 ein Führungskanal mit ineinander steckbaren Bodenelement und Seitenwänden.

Derartige Führungsvorrichtungen mit Führungsrinnen sind robust, jedoch relativ aufwendig in der Montage und teuer in Herstellung. Die einander gegenüberliegenden Seitenwände der Führungsrinne müssen parallel zueinander entlang der Längsrichtung ausgerichtet und an einer Tragkonstruktion, bspw. an C-Profilen, die quer zur Längsrichtung angeordnet sind, befestigt werden. Die Seitenwände sind typisch aus mehreren stirnseitig aneinander angereihten L-förmigen Stahlblechen zusammengebaut, die üblicherweise an der Tragkonstruktion durch Montagewinkel und Schraubverbindungen befestigt werden, wie bspw. in DE 195 12 086 C1 oder in DE 295 11 726 U1 beschrieben. Seitenwände einer Führungsrinne können innenseitig Gleitschienen zum Abgleiten des einen und/oder des anderen Trums tragen, welche an den Seitenwänden mittels Schraubverbindungen befestigt werden. Seitenwände einer Führungsrinne wirken einem Abweichen der Leitungsführungseinrichtung seitlich nach Außen, d.h. in der eingangs genannten Querrichtung entgegen, indem sie die den äußeren Hauptseiten der Seitenlaschen leiten. Die äußeren Hauptseiten der Seitenlaschen schlagen ggf. beim Verfahren der Kette an den Seitenwänden der Führungsrinne an bzw. gleiten hieran seitlich ab. Das kommerziell verfügbare System "Autoglide" der igus GmbH verwendet stattdessen rundliche Bodenführungselemente, die entlang und beidseitig des Verfahrwegs angeordnet werden, sodass die Kette beim Verfahren zwischen diesen Bodenführungselementen abgelegt wird und beim etwaigen Abweichen an diesen abrutscht und dadurch zentriert wird. DE 20 2012 010236 U1 offenbart auch eine Energieführungskette.

Eine Aufgabe der vorliegenden Erfindung besteht darin, ein vereinfachtes Leitungsführungssystem vorzuschlagen, das insbesondere kostengünstiger herstellbar und einfacher montierbar ist.

Diese Aufgabe wird bereits durch ein Leitungsführungssystem nach Anspruch 1 gelöst.

Bei einem Leitungsführungssystem nach dem Oberbegriff des Anspruchs 1 wird erfindungsgemäß vorgeschlagen, dass die Führungsvorrichtung mindestens einen Führungsstrang umfasst, der zum Vorgeben eines gewünschten Verlaufs der Teilstrecke des Verfahrweges anordenbar ist, und dass die Leitungsführungseinrichtung außenseitige Profilbereiche aufweist, die mit einer Profilform für eine querstabilisierende Führung an bzw. auf dem Führungsstrang durch vor- und/oder rückspringendes Ineinandergreifen der Querschnitte von Führungsstrang und Profilform gestaltet sind.

Die Zusammenwirkung der Profilbereiche mit dem separaten Führungsstrang ermöglicht es, einem seitlichen Abweichen der verfahrbaren Leitungsführungseinrichtung vom vorgegebenen Verlauf der Teilstrecke des Verfahrwegs in der Querrichtung entgegenzuwirken. Somit sind insbesondere ausgeprägte Seitenwände nicht erforderlich, d.h. hiermit einhergehende Kosten und Montageaufwand erübrigen sich. Die Profilbereiche können insbesondere zum Anliegen an und/oder zum Aufliegen auf dem Führungsstrang außenseitig an der Leitungsführungseinrichtung angeordnet sein.

Die Anordnung der Profilbereiche an der Leitungsführungseinrichtung kann dabei insbesondere so gewählt sein, dass die Profilbereiche im montierten bzw. betriebsbereiten Zustand des Systems auf den Führungsstrang auflegbar sind, insbesondere auf die Oberseite des Führungsstrangs auflegbar, um die querstabilisierende Zusammenwirkung der Profilbereiche mit dem Führungsstrang zu erzielen.

Die Profilbereiche sind hierzu an einer der Umlenkachse bzw. dem jeweils gegenüberliegenden Trum zugewandten Seite eines Trums und/oder an einer der Umlenkachse bzw. dem jeweils gegenüberliegenden Trum abgewandten Seite eines Trums zum Zusammenwirken mit dem mindestens einen Führungsstrang vorgesehen. Das Zusammenwirken mit dem mindestens einen Führungsstrang kann sich so inhärent durch das Eigengewicht beim Verfahren einstellen. Der Führungsstrang kann dabei als eine Art Auflager mit tragender und zugleich führender bzw. richtungsleitender Wirkung dienen. Eine Tragfunktion ist jedoch nicht erforderlich bzw. nicht entscheidend für die Querstabilisierung.

Die Profilbereiche weisen jeweils eine Profilform auf, die einen querstabilisierenden Eingriff des jeweiligen Profilbereichs mit dem Führungsstrang ermöglicht und die Leitungsführungseinrichtung in seitlicher Richtung auf dem gewünschten Verlauf hält. Unter einem vor- und/oder rückspringenden Ineinandergreifen der Querschnitte von Führungsstrang und Profilform wird hierbei sowohl ein konvexes Eingreifen des Führungsstrangs in eine zumindest bereichsweise konkave Profilform, als auch umgekehrt ein Eingreifen einer bereichsweise konvexen Profilform in einen bereichsweise im Querschnitt konkaven Führungstrang verstanden, und weiterhin auch eine Kombination von konvex-konkavem Eingriff entsprechend konvex und konkaver Querschnitte beider Bestandteile.

Beim Verfahren stehen jeweils zumindest einige Profilbereich eines Längsabschnitts der Leitungsführungseinrichtung bzw. zumindest eines Trums in Eingriff mit dem Führungsstrang, der entlang des gewünschten Verfahrweges angeordnet bzw. befestigt ist. Das bewirkt eine vorbestimmte bzw. gewünschte Ausrichtung der Leitungsführungseinrichtung am Führungsstrang. Die Zusammenwirkung von Profilbereichen und Führungsstrang wirkt einem seitlichen Abweichen der Leistungsführungseinrichtung in der Querrichtung vom gewünschten Verlauf entgegen. Eine seitliche Abstützung der Leitungsführungseinrichtung durch Seitenwände einer Führungsrinne ist somit nicht nötig, und es muss keine typische Führungsrinne vorgesehen werden. Dadurch können Herstellungs und Montagekosten reduziert werden.

Ein Kerngedanke der Erfindung besteht darin eine konstruktiv besonders einfache Bauweise des Führungstrangs vorzuschlagen, welcher spurhaltend mit korrespondierenden Profilbereichen an der Leitungsführungseinrichtung zusammenwirkt.

Der Führungsstrang kann insbesondere seilförmig, stangenförmig, profilstabartig oder in derartiger Bauform ausgeführt sein mit vergleichsweise klein bauendem Querschnitt im Vergleich zur Leitungsführungseinrichtung, jedoch ähnlicher Längserstreckung, insbesondere über mindestens die Hälfte der Gesamtlänge der Leitungsführungseinrichtung. Der Führungsstrang kann zum Vorgeben eines gewünschten Verlaufs der Teilstrecke des Verfahrweges ausgerichtet bzw. befestigt werden.

Die Profilbereiche der Leitungsführungseinrichtung sind im Querschnitt vorzugsweise komplementär zum Querschnitt des entsprechend zusammenwirkenden Führungsstrangs, insbesondere konkav, ausgebildet.

Die Profilbereiche der Leitungsführungseinrichtung können insbesondere mit zwei seitlichen Halteflächen ausgestattet sein, um - ähnlich seitlichen Leitflächen - eine Bewegungsfreiheit des jeweiligen Profilbereichs relativ zum Führungsstrang in der Querrichtung zu begrenzen. Die Profilbereiche müssen beim Verfahren nicht in ständigem Kontakt mit dem Führungsstrang stehen um eine Querstabilisierung zu erreichen.

Die Profilbereiche können jeweils, im Querschnitt betrachtet, zu einem teilweisen umgreifen bzw. teilumfänglichen Erfassen des Führungsstrangs ausgebildet sein. In Kombination mit zwei parallelen Führungssträngen sind auch Profilbereiche mit nur einer seitlich bzw. in Querrichtung haltenden Haltefläche - ähnlich einem Schienenstrang - möglich.

Zumindest einige der Profilbereiche können jeweils mindestens eine in der Längsrichtung erstreckte, axial und radial offene, Vertiefung mit einer im allgemein geometrischen Sinne zylindrischen Innenwand und vorzugsweise mit einem teilkreisförmigen Querschnitt aufweisen. Unter einer zylindrischen Innenwand wird allgemein eine Wandung verstanden, die parallel zu einer Längsachse verläuft.

Die Profilbereiche haben, senkrecht zur Längsrichtung, vorzugsweise in etwa oder exakt gleichbleibenden Querschnitt. Auch der Führungsstrang hat bevorzugt einen im Wesentlichen entlang der nutzbaren Längserstreckung gleichbleibenden Querschnitt senkrecht zur Längsrichtung.

Der mindestens eine Führungsstrang ist insbesondere linear erstreckt anordenbar und kann in einem betriebsbereit montierten Zustand linear erstreckt angeordnet sein, um einen linearen Verlauf der Teilstrecke des Verfahrweges vorzugeben bzw. Abweichungen der Leitungsführungseinrichtung von einem Geradlauf entgegenzuwirken. Ein kurvilinearer Verlauf des Verfahrwegs einer Leitungsführungseinrichtung liegt ebenfalls im Rahmen der Erfindung.

In einer Ausführungsform können die Profilbereiche als Bestandteile von separaten an der Leitungsführungseinrichtung befestigbaren Anbaumodulen vorgesehen sein. Auf diese Weise können bereits bestehende Leitungsführungseinrichtungen zum Einsatz als Teil des hier beschriebenen Leitungsführungssystems nachgerüstet werden, bzw. umgerüstet werden. Die Anbaumodule können dem Leitungsführungssystem insoweit Modularität verleihen. Die Anbaumodule können einteilig oder mehrteilig aus Kunststoff hergestellt sein.

In einer Ausführungsform weist die Führungsvorrichtung einen Längsabschnitt mit mindestens einem tragenden Führungsstrang auf, der zum Tragen zumindest eines Teils der Last der Leitungsführungseinrichtung anordnenbar ist, insbesondere zum Tragen des oberen bzw. des beweglichen Trums. Der obere Trum kann auf dem tragenden Führungsstrang bzw. Führungssträngen mit einem vertikalen Abstand bzw. mit einem Abstand in der Höhenrichtung zu einer Auflagefläche des unteren Trums geführt werden, wobei die Profilbereiche des oberen Trums vorzugsweise lastübertragend auf dem Führungsstrang bzw. Führungssträngen aufliegen. Die Last ist vorzugsweise durch die Profilbereiche auf den mindestens einen Führungsstrang, der z.B. in Art einer Tragschiene wirkt, übertragbar.

Der mindestens eine Führungsstrang ist vorzugsweise durchgehend, insbesondere einteilig, entlang der Teilstrecke des Verfahrweges ausgeführt.

Der mindestens eine Führungsstrang kann als Profilstab bzw. langgestreckter Profilstrang ausgebildet sein, der an einem Aufbau mit einer vorgesehenen Montagefläche bzw. Stützfläche entlang des Verfahrweges befestigbar bzw. befestigt ist. Im Prinzip sind alle stabförmigen, stangenförmigen oder rohrähnlichen, im wesentlichen biegesteife, Führungsstränge verwendbar, bei welchen die Querschnittsform die gewünschte Zusammenwirkung mit den Profilbereichen ermöglicht.

In besonders bevorzugter Ausführungsform ist der mindestens eine Führungsstrang jedoch als spannbares flexibles Gebilde, insbesondere Seil, Draht, Schnur oder dergleichen, ausgeführt, welches zum Einspannen entlang des Verfahrweges geeignet ist. Ausführungsformen mit spannbarem, seilartigem Führungsstrang sind besonders einfach und schnell zu montieren, da ein geradliniger Verlauf inhärent durch Einspannen zwischen zwei Endpunkten erzielt wird.

Die Außenkontour des Querschnitts des Führungsstrangs ist vorzugsweise im geometrischen Sinne konvex, bevorzugt glatt konvex (ohne Ecken und Kanten) zur Vermeidung von Abriebkanten bzw. Störkanten.

Die Führungsvorrichtung umfasst in einer Ausführungsform zwei Führungsstränge, die parallel zueinander montierbar bzw. montiert sind. Die zwei Führungsstränge können vorzugsweise in der Querrichtung voneinander beabstandet angeordnet sein, was für eine gute Führung und eine erhöhte mechanische Stabilität des Leitungsführungssystems von Vorteil ist, insbesondere bei lasttragenden Führungssträngen.

Die Führungsvorrichtung umfasst vorzugsweise mindestens eine Befestigungsvorrichtung für den Führungsstrang. Der mindestens eine Führungsstrang kann in einem betriebsbereiten Zustand zumindest endseitig, bzw. in seinen Endbereichen, durch jeweils eine Befestigungsvorrichtung befestigt sein, bspw. an der vorgesehenen Montagefläche. Der mindestens eine Führungsstrang kann insbesondere lediglich endseitig durch jeweils eine Befestigungsvorrichtung befestigt sein, vorzugsweise zwischen den Befestigungsvorrichtungen gespannt sein, insbesondere wenn als Seil, Draht, Schnur oder dergleichen ausgeführt. Insbesondere mit einstückig aufgebauten Führungssträngen können Zeit bzw. Kosten bei der Endmontage gespart werden.

Der Führungsstrang kann auch mehrteilig ausgeführt sein, insbesondere aus aufeinanderfolgenden aneinander gereihten, separate Strangabschnitten zusammengesetzt sein.

Die Leitungsführungseinrichtung kann mehrere jeweils gelenkig miteinander verbundene Kettenglieder bzw. Segmente umfassen. Falls der Führungsstrang aus einer Anzahl separater Längsabschnitte aufgebaut ist, sollte die Längserstreckung eines Längsabschnitts des Führungsstrangs vorzugsweise jeweils ein Vielfaches der Längserstreckung eines Kettenglieds bzw. Segments der Leitungsführungseinrichtung betragen. Dies erlaubt eine vergleichsweise schnelle Montage des Führungsstrangs aus wenigen Bauteilen, insbesondere Gleichteilen.

Der mindestens eine Führungsstrang kann integral bzw. einteilig mit einer Montagefläche bzw. Stützfläche ausgeführt sein und z.B. dieser vorstehen oder hierin als Spur vertieft sein.

In einer Ausführungsform kann die Führungsvorrichtung zwei Führungsebenen je für einen der Trume in jeder Führungsebene bilden. Jede der Führungsebenen kann dabei mindestens einen Führungsstrang, vorzugsweise mindestens zwei Führungsstränge, aufweisen. Die Führungsebenen können in einer Höhenrichtung senkrecht zur Längsrichtung und senkrecht zur Querrichtung, bzw. vertikal, voneinander beabstandet sein. Insbesondere in der Führungsebene für den Obertrum kann die Führungsvorrichtung dabei mit den zwei Führungssträngen wie ein Schienenstrang wirken, welcher zugleich lasttragende und richtungsleitende Funktion hat.

Die Leitungsführungseinrichtung ist eine Energieführungskette, die in Gliederkettenbauweise ausgeführt ist. Die Energieführungskette weist die zwei einander gegenüberliegende Stränge aus Seitenlaschen und diese in der Querrichtung verbindende Querstege auf, wobei die Seitenlaschen eines Stranges jeweils paarweise gelenkig miteinander verbunden sind.

In einer bevorzugten Ausführungsform hat die Leitungsführungssystem Anbaumodule zum Nachrüsten der Energieführungskette mit den Profilbereichen. Die Anbaumodule können jeweils mindestens einen Profilbereich aufweisen und zum Befestigen an einem Quersteg und/oder einer Seitenlasche ausgebildet sein. Die Anbaumodule können insbesondere mit einem Quersteg und/oder mit einer Seitenlasche verrastbar sein. Das hat den Vorteil, dass bestehende Energieführungsketten für ein System mit Führungsstrang bzw. Führungssträngen nachgerüstet werden können.

Alternativ oder ergänzend können zumindest einige der Querstege und/oder zumindest einige der Seitenlaschen jeweils zumindest einen integrierten Profilbereich zur Zusammenwirkung mit dem Führungsstrang aufweisen.

Die Anbaumodule können insbesondere außenseitig an der abgewandten Seite der Energieführungskette angeordnet sein, welche dem jeweils gegenüberliegenden Trum abgewandt bzw. der Umlenkachse des Umlenkbogens abgewandt ist.

In einer Ausführungsform sind die Anbaumodule an der abgewandten Seite der Energieführungskette vorgesehen, d.h. die Seite welche dem jeweils gegenüberliegenden Trum abgewandt bzw. der Umlenkachse des Umlenkbogens abgewandt ist.

Es können paarweise seitlich außen vorgesehene Stützkufen, insbesondere mit den Anbaumodulen integrale Stützkufen, vorgesehen werden, die in der Querrichtung voneinander und von den Profilbereichen beabstandet sind. Die Stützkufen können insbesondere einem Kippen um die Längsrichtung entgegenwirken. Diese Ausführungsform kann insbesondere dann vorteilhaft sein, wenn das Leitungsführungssystem für einen bestimmten Abschnitt bzw. eines der Trume nur einen bspw. mittig angeordneten Führungsstrang aufweist.

In einer Ausführungsform weist die Führungsvorrichtung ein erstes Paar paralleler Führungsstränge in Form von Profilstäben zum Führen des ruhenden Trums, der insbesondere der untere Trum sein kann, und ein zweites Paar paralleler Führungsstränge in Form von Profilstäben zum Führen und Tragen des verfahrbaren Trums, der insbesondere der obere Trum sein kann, auf. Jeder Trum kann dabei paarweise und im Querschnitt symmetrisch angeordnete erste Profilbereiche, die dem jeweils gegenüberliegenden Trum abgewandt sind, und paarweise und im Querschnitt symmetrisch angeordnete zweite Profilbereiche, die dem jeweils gegenüberliegenden Trum zugewandt sind, aufweisen, wobei ersten Profilbereiche mit dem ersten Paar Profilstäbe und zweiten Profilbereiche mit dem zweiten Paar Profilstäbe zusammenwirken können.

In einer Ausführungsform kann das Anbaumodul sowohl dem gegenüberliegenden Trum bzw. der Umlenkachse zugewandte Profilbereiche, als auch dem gegenüberliegenden Trum bzw. der Umlenkachse abgewandte Profilbereiche aufweisen, insbesondere wobei die dem gegenüberliegenden Trum bzw. der Umlenkachse zugewandte Profilbereiche jeweils zum Führen des oberen Trums auf zumindest einem Führungsstrang, vorzugsweise auf einem Profilstab, ausgeführt sind.

Die Führungsvorrichtung kann mindestens einen als Profilstrang ausgeführten Führungsstrang aufweisen, vorzugsweise mit einem Profilquerschnitt, welcher mit den Profilbereichen der Leitungsführungseinrichtung durch alternierend vor- und rückspringendes Ineinandergreifen zusammenwirken kann.

Gemäß einem unabhängigen Erfindungsaspekt kann der Führungsstrang als langgestrecktes Profilbauteil, insbesondere Kunststoffprofil, ausgeführt sein, welches mit einem geeigneten Querschnitt für eine querstabilisierende Zusammenwirkung mit einer an sich bekannten Gestaltung von Energieführungsketten gemäß dem Prinzip aus EP 0 879 367 B1 gestaltet ist. Das Kunststoffprofil ersetzt dabei einen Teil des Untertrums und ermöglicht anstelle der Bauweise mit sog. Endeinspeisung, welche zu Führungszwecken eine Überlänge des Untertrums erfordert, eine kostengünstigere Bauweise mit einer um bis zu 50% kürzeren Energieführungskette (und sog. Mitteneinspeisung).

Insbesondere aber nicht ausschließlich in Kombination mit letztgenanntem Erfindungsaspekt kann die Leitungsführungseinrichtung vorzugsweise an der dem jeweils gegenüberliegenden Trum zugewandten Seite jedes Trums mehrere in der Längsrichtung erstreckte kammartige Vorsprünge aufweisen, um beim Verfahren des einen, oberen Trums auf dem anderen, unteren Trum die kammartigen Vorsprünge der beiden Trume miteinander kämmen zu lassen, um die beiden Trume gegen eine Querverschiebung relativ zueinander bzw. seitlich aneinander zu halten. Diese Ausführungsform erlaubt eine zusätzliche Querstabilisierung quer zur Längsrichtung.

In einer Ausführungsform kann die erste bzw. feststehende Anschlussstelle an einem Längsende des Verfahrwegs angeordnet sein (sog. Endeinspeisung), wobei der obere bzw. verfahrbare Trum von einem Längsende des Verfahrwegs zum anderen Längsende des Verfahrwegs auf dem unteren bzw. ruhenden Trum abgestützt, insbesondere gleitend verfahren kann (sog. gleitende Anordnung). Hierbei ist eine Kombination mit den oben beschriebenen kammartigen Vorsprüngen vorteilhaft, da der obere Trum am unterem Trum gegen Querverschiebung gehalten werden kann. In einer solchen Ausführungsform ist es ausreichend, lediglich den Untertrum durch einen Führungsstrang seitlich zu führen.

In einer weiteren Ausführungsform kann die erste bzw. feststehende Anschlussstelle im mittleren Bereich zwischen den zwei Längsenden des Verfahrwegs angeordnet sein (sog. Mitteneinspeisung), wobei der obere bzw. verfahrbare Trum entlang nur etwa eines ersten Teils, insbesondere einer ersten Hälfte des Verfahrwegs auf dem unteren bzw. ruhenden Trum gestützt verfährt und dabei ggf. durch kammartige Vorsprünge an Untertrum gegen Querverschiebung gehalten sein. Bei dieser Ausführungsform kann ein Führungsstrang zum Führen des oberen Trums entlang des weiteren Teils bzw. weiteren zweiten Hälfte des Verfahrwegs, vorgesehen sein. Dieser Führungsstrang für das Obertrum ist zwischen der feststehenden Anschlussstelle und dem zweiten Längsende des Verfahrwegs angeordnet. Dabei ist dieser Führungsstrang bevorzugt mit einem vertikalen Abstand zur Auflagefläche des unteren Trums angeordnet.

Als Weiterentwicklung der vorstehenden Ausführungsform kann vorgesehen sein, dass zumindest ein weiterer Führungsstrang zum Führen bzw. zur Querstabilisierung des unteren Trums vorgesehen ist. In einer vorteilhaften Ausführungsform kann dieser untere Führungsstrang zum Führen des unteren Trums zugleich den erstgenannten, oberen Führungsstrang für das Obertrum gegen eine Querverschiebung sichern, insbesondere durch Formschluss im Querschnitt.

In einer Ausführungsform kann der untere Trum durch Zusammenwirken eines zugeordneten Führungsstrangs, insbesondere durch ein gespanntes Seil oder dgl., mit Profilbereichen, die außenseitig an der abgewandten Seite der Energieführungskette, welche dem jeweils gegenüberliegenden Trum abgewandt ist, angeordnet sind, geführt sein.

Alternativ oder ergänzend, kann der obere Trum durch Zusammenwirken des als Profilstrang ausgeführten Führungsstrangs, bzw. mehrerer Profilstränge, mit den kammartigen Vorsprüngen geführt sein.

In einer Ausführungsform kann ein als Profilstrang ausgeführter Führungsstrang für das obere Trum auf dem seilartigen Führungsstrang für das untere Trum seitlich gehalten sein, sodass im montierten Betriebszustand der obere Trum durch Zusammenwirken kammartiger Vorsprünge am Profilstrang geführt ist. Die kammartigen Vorsprünge am Profilstrang können integral bzw. einteilig mit diesem Profilstrang und im Querschnitt komplementär zu entsprechenden kammartigen Vorsprüngen der Energieführungskette ausgeführt sein. In dieser Ausführungsform ist der Untertrum vorzugsweise durch ein gespanntes Seil geführt.

Die Erfindung betrifft ferner ein Anbaumodul für eine Energieführungskette, welches zum Anbau an einen Quersteg und/oder an eine Seitenlasche eines Kettenglieds ausgebildet ist und zumindest einen Profilbereich aufweist, wobei das Anbaumodul zum Zusammenwirken mit mindestens einem querstabilisierenden Führungsstrang ausgeführt ist wobei der jeweilige Profilbereich außenseitig angeordnet und komplementär zu einem seil- oder stabförmigen Führungsstrang ausgebildet ist und mindestens eine Vertiefung, insbesondere mit teilzylindrischer Innenwandung aufweist. Zur einfachen, werkzeuglosen Befestigung kann das Anbaumodul insbesondere mit dem Quersteg und/oder der Seitenlasche verrastbar gestaltet sein.

Der Profilbereich des Anbaumoduls ist außenseitig zugänglich und kann insbesondere radial innen, d.h. an einer der Umlenkachse bzw. dem jeweils gegenüberliegenden Trum zugewandten Seite oder, je nach Ausführungsform umgekehrt, radial außen d.h. an einer der Umlenkachse bzw. dem jeweils gegenüberliegenden Trum abgewandten Seite der Energieführungskette angeordnet sein. Die Vertiefungen verlaufen dabei in der Längsrichtung der Energieführungskette. Die Anbaumodule können insbesondere im Obertrum als Gleitkufen wirken, welche an dem oder den Führungssträngen gleitend geführt sind.

In einer Ausführungsform weist das Anbaumodul neben dem Profilbereich zwei seitliche Stützkufen auf, die in der Querrichtung voneinander beabstandet sind. Die Stützkufen können insbesondere dann vorteilhaft sein, wenn das Leitungsführungssystem nur einen Führungsstrang umfasst, wobei die Stützkufen den unteren Trum waagerecht liegend bzw. kippstabil stützen. Das Anbaumodul ist vorzugsweise aus Kunststoff, insbesondere einteilig hergestellt, und kann ggf. ein Tribopolymer mit verbesserten tribologischen Eigenschaften umfassen.

Die Erfindung betrifft ferner ein Kettenglied für eine Energieführungskette für ein Leitungsführungssystem nach einem der vorstehenden Ausführungsformen, umfassend zwei einander in einer Querrichtung gegenüberliegende Seitenlaschen, die jeweils zwei in einer Längsrichtung verlaufende Schmalseiten aufweisen, und mindestens einen diese Seitenlaschen verbindenden Quersteg, wobei die Seitenlaschen und der Quersteg einen Aufnahmeraum für zu führende Versorgungsleitungen definieren.

Das Kettenglied weist zumindest einen dem Aufnahmeraum abgewandten außenseitigen Profilbereich zum Zusammenwirken mit zumindest einem seil- oder stabförmigen Führungsstrang auf, wobei der jeweilige Profilbereich an zumindest einem der Querstege und/oder an zumindest einer der Schmalseiten der jeweiligen Seitenlasche angeordnet ist und eine im Querschnitt zum seil- oder stabförmigen Führungsstrang komplementäre, insbesondere konkave teilzylindrische, Profilform aufweist.

Der Profilbereich kann außenseitig integral mit dem Quersteg geformt, insbesondere angeformt sein. Alternativ oder ergänzend, kann der Profilbereich als Bestandteil eines separaten Anbaumoduls mit dem Quersteg verrastet sein.

Die einzelnen vorstehenden Merkmale von Führungsstrang und Profilbereich sind vorteilhaft miteinander kombinierbar und ggf. auch unabhängig voneinander als erfindungswesentlich zu betrachten.

Weitere Einzelheiten, Merkmale und Vorteile der Erfindung sind der nachfolgenden, ausführlicheren Beschreibung bevorzugter Ausführungsbeispiele anhand der beiliegenden Figuren zu entnehmen. Diese zeigen rein beispielhaft:
- FIG.1A, 1B:: ein erstes Ausführungsbeispiel des erfindungsgemäßen Systems in Seitenansicht (FIG.1A) und in Querschnitt senkrecht zur Längsrichtung (FIG.1B);
- FIG.2A-2D:: ein zweites Ausführungsbeispiel des erfindungsgemäßen Systems in Seitenansicht (FIG.2A), in Querschnitt entlang N-N (FIG.2B), in Querschnitt entlang P-P (FIG.2C), und in Perspektivansicht (FIG.2D);
- FIG.3A-3C: ein drittes Ausführungsbeispiel des erfindungsgemäßen Systems in Seitenansicht (FIG.3A), in Querschnitt entlang V-V (FIG.3B), und in Querschnitt entlang W-W (FIG.3C); und
- FIG.4A-4B:: ein Anbaumodul (FIG.4A) und ein Kettenglied mit dem angebauten Anbaumodul nach FIG. 4A (FIG.4B) in Perspektivdarstellung.

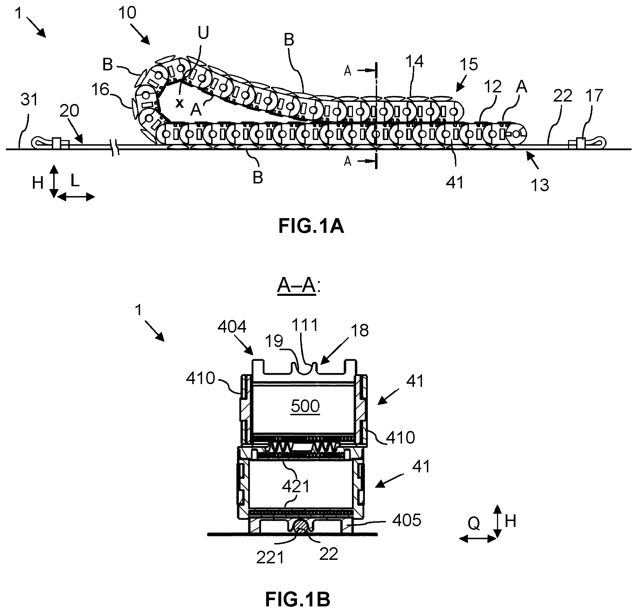

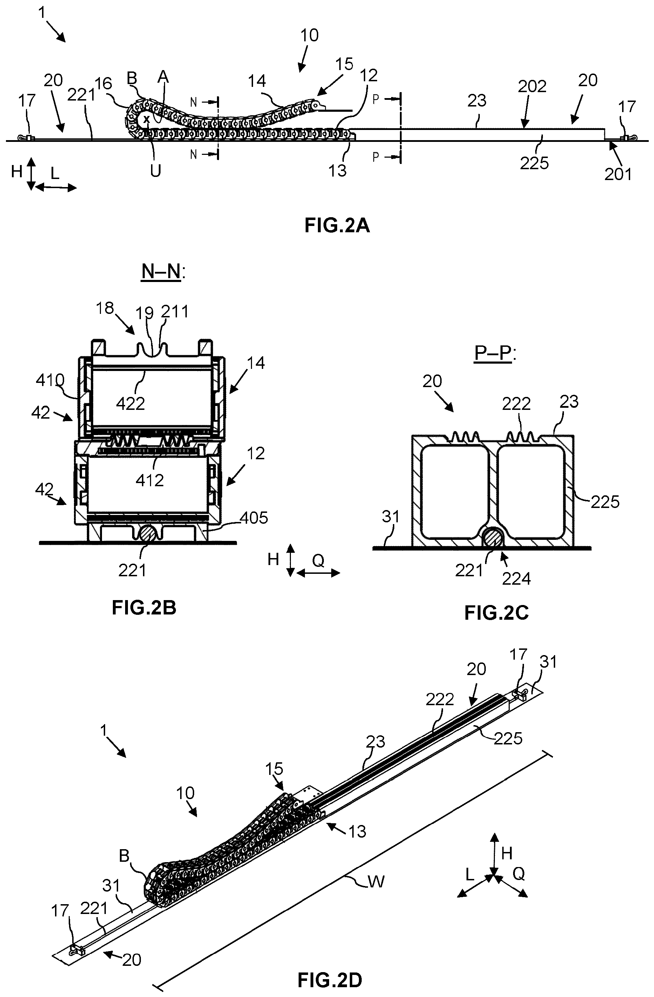

FIG.1A, 2A und 3A zeigen eine Leitungsführungseinrichtung 10, die nicht gezeigte Versorgungsleitungen von einer ersten Anschlussstelle 13 an einer feststehenden Basis zu einer zweiten Anschlussstelle 15 an einer zu versorgenden Maschine führt. Die zweite, bewegliche Anschlussstelle 15 verfährt in einer Längsrichtung L entlang eines Verfahrweges W (in FIG.2D gezeigt), hier in einer vertikalen Ebene. Die Leitungsführungseinrichtung 10 formt in dem gezeigten betriebsbereiten Zustand einen unteren Trum 12 und einen oberen Trum 14. Der untere Trum 12 ist endseitig an die feststehende Anschlussstelle 13 angeschlossen ist und auf einer Montagefläche 31 abgelegt ist. Der obere Trum 14, ist an die bewegliche Anschlussstelle 15 angeschlossen und verfährt entlang des Verfahrweges W teilweise auf dem unteren Trum 12 gleitend. Zwischen beiden Trumen 12, 14 ist ein Umlenkbogen 16 gebildet, der um eine Umlenkachse U gekrümmt ist und ebenfalls entlang des Verfahrweges W verfährt. Die Umlenkachse U verläuft senkrecht zur Ebene der Fig.1A, 2A und 3A, hier horizontal.

Die Leitungsführungseinrichtung 10 verfährt in einer Verfahrebene, in der die Längsrichtung L und eine Höhenrichtung H liegen, wobei eine Querrichtung Q parallel zur Umlenkachse U verläuft. Die Leitungsführungseinrichtung 10 weist im montierten bzw. betriebsbereiten Zustand zwei Seiten A, B auf. Die radial innere Seite A ist im Bereich des Umlenkbogens 16 der Umlenkachse U zugewandt, und in Bereichen der Trume 12, 14 dem jeweils gegenüberliegenden Trum 12, 14 zugewandt. Die radial äußere Seite B ist im Bereich des Umlenkbogens 16 der Umlenkachse U abgewandt, und in Bereichen der Trume 12, 14 dem jeweils gegenüberliegenden Trum 12, 14 abgewandt. Die Seite B liegt im unteren Trum 12 auf der Auflagefläche bzw. Montagefläche 31 abgestützt.

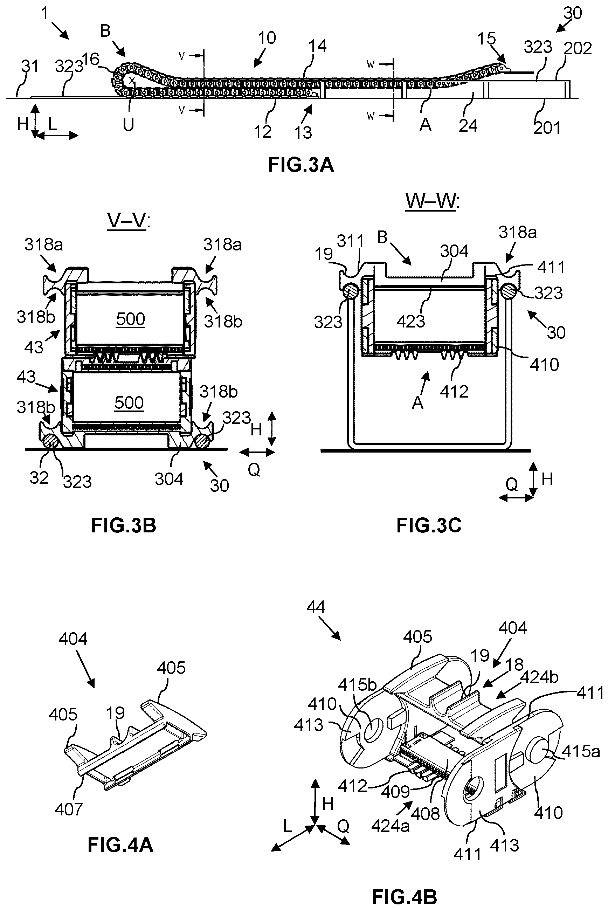

Die Leitungsführungseinrichtung 10 ist eine Energieführungskette, die aus gelenkig bzw. schwenkbar miteinander verbundenen Kettengliedern 41, 42, 43, 44 aufgebaut ist. Ein Kettenglied 44 ist perspektivisch in der FIG.4B und in Querschnitt in FIG.1B, FIG.2B und FIG.3B gezeigt. Das Kettenglied 41, 42, 43, 44 umfasst zwei parallele Seitenlaschen 410, die hier durch jeweils zwei Querstege 421, 422, 423, 424 in der Querrichtung Q voneinander beabstandet und miteinander verbunden sind. Die Seitenlaschen 410 aufeinander folgender Kettenglieder 41 sind um eine Schwenkachse gegeneinander schwenkbar, wobei die Schwenkachse in der Querrichtung Q parallel zu der Umlenkachse U verläuft bzw. diese definiert.

Das Leitungsführungssystem 1 umfasst in allen Ausführungsbeispielen mindestens eine Führungsvorrichtung 20 mit einem Führungsstrang 22, welcher die Leitungsführungseinrichtung 10 entlang des Verfahrweges W führt. Die Leitungsführungseinrichtung 10 weist zum Führungsstrang 22 kompatible bzw. komplementär geformte Profilbereiche 18 auf, die während des Verfahrens der Leitungsführungsvorrichtung 10 mit dem Führungsstrang 22 in Eingriff kommen und im Eingriff mit dem Führungsstrang 22 in Längsrichtung L verfahren können. Wegen dieser Zusammenwirkung bleibt die Leitungsführungseinrichtung 10 in der vorgesehenen Verfahrebene, in der die bewegliche Anschlussstelle 15 verfährt, d.h. senkrecht zur Umlenkachse U, seitlich gehalten. Die Profilbereiche 18 bilden hierzu seitliche Halteflächen 111, 211, 311 geeigneter Geometrie, die abhängig vom gewählten Führungsstrang 22 gestaltet sind. Die einzelnen Profilbereiche 18 sind entlang der Länge der Leitungsführungseinrichtung 10 verteilt angeordnet und haben eine kürzere Längserstreckung als die einzelnen Kettenglied 41, 42, 43, 44.

Die Profilform der Profilbereiche 18 korrespondiert im Querschnitt mit der Querschnittsform des Führungsstrangs 22, und ist so gewählt, dass bei Andrücken bzw. Anliegen des Profilbereichs 18 eines Kettenglieds 41 an den bzw. am Führungsstrang 22, der Profilbereich 18 sich am Führungsstrang 22 ausrichtet und das Kettenglied 41 in eine vorgesehene gewünschte Orientierung des Führungsstrangs 22 tendiert. Somit wird einem Abweichen, z.B. von einem gewünschten linearen Geradlauf entgegengewirkt und ein seitliches Ausscheren der Leitungsführungseinrichtung 10 aus der vorgesehenen Verfahrebene verhindert.

Der Führungsstrang 22 im Ausführungsbeispiel nach FIG.1A, 1B ist als zugfestes Seil 221, bspw. als Stahlseil oder Kunststoffseil, ausgeführt und hat einen im wesentlichen kreisrunden Querschnitt. Das Seil 221 ist zwischen zwei Befestigungsvorrichtungen 17 gespannt, nämlich in der vorgesehenen Verfahrebene entsprechend dem vorgesehenen Verfahrweg W der zu versorgenden Maschine verläuft. Die Befestigung und Ausrichtung kann somit besonders einfach mit zwei endseitigen Befestigungsvorrichtungen 17 erfolgen, zwischen denen das Seil 221 gespannt wird. Die Spannkraft des Seils 221 zwischen den Befestigungsvorrichtungen 17 ist so gewählt, dass dieses typische Querkräfte, die an der Energieführungskette 10 auftreten können, abfängt.

Die Kettenglieder 41, näher in FIG.4B dargestellt, sind jeweils mit Anbaumodulen 404 aus Kunststoff ausgestattet, die an der Seite B mit Querstegen 421 verrastet sind, z.B. durch eine steckbare Clipverbindung. Ein entsprechendes Anbaumodul 404 ist einzeln im Detail in FIG.4A gezeigt und kann z.B. als einteiliges Spritzguss-Teil hergestellt sein. Die Profilbereiche 18 sind jeweils als Vertiefung 19, Nut, Rinne, Aufnahme oder dergleichen, im Querschnitt konkav geformt. Die Vertiefung 19 ist am Anbaumodul 404 und somit dem Quersteg 421 mittig bezüglich der Querrichtung Q angeordnet und hat eine halbzylindrische Innenwandung mit einem in der Längsrichtung L gleichbleibenden Querschnitt, hier z.B. in Form einer Halbkreisscheibe passend zum Querschnitt des Seils 221. Das Anbaumodul 404 weist ferner zwei seitliche Stützkufen 405 beidseitig der Vertiefung 19 auf, die in der Querrichtung Q voneinander und von den Profilbereichen 18 beabstandet sind. Die je nach Form der Profilbereiche 18 optionalen Stützkufen 405 wirken einem Kippen um die Längsrichtung L auf dem Seil 221 entgegen.

Die Führungsvorrichtung 20 in FIG.2A-2D ist für eine Wirkung auf zwei Führungsebenen 201, 202 aufgebaut. In einer unteren Führungsebene 201 wirkt die Führung entsprechend dem in der FIG.1A-1C gezeigten Seil 221, das zwischen zwei Befestigungsvorrichtungen 17 geradlinig eingespannt ist. Das Seil 221 führt und hält den unteren Trum 12. Die obere Führungsebene 202 ist durch mehrere parallele Profilstränge 222 gebildet, die integral mit einer Stützfläche 23 ausgebildet sind. Die Stützfläche 23 ist in der Höhenrichtung H bzw. vertikal von der externen Montagefläche 31, z.B. an einer Maschine beabstandet. Die Profilstränge 222 führen den Obertrum 14 in linearer Verlängerung des Untertrums 13 weiter, und weisen dazu einen in der Längsrichtung L gleichbleibenden Querschnitt komplementär zu kammartigen Vorsprüngen 412 der Leitungsführungseinrichtung 10 auf. Die kammartigen Vorsprünge können dabei gemäß der Lehre aus EP 0 879 367 B1 gestaltet sein, welche insoweit hier zur Verkürzung einbezogen wird. Die Profilstränge 222 gebildet sind integral mit der Stützfläche 23 durch ein oder mehrere baugleiche kanalartige Kunststoffprofile 225 bereitgestellt, welche zum Prinzip aus EP 0 879 367 B1 kompatibel ausgeführt sind.

Der Obertrum 14, ausgehend vom Umlenkbogen 16, verfährt zuerst auf dem Untertrum 12, wobei die kammartigen Vorsprünge 412 an der inneren Seite A des oberen Trums 14 und an der inneren Seite A des unteren Trums 12 miteinander kämmen. Der Obertrum 14 fährt an der feststehenden Anschlussstelle 13 vorbei auf die Stützfläche 23, die als stützende Lauffläche 212 für den Obertrum 14 dient, und wird dabei durch die Profilstränge 222 geführt und durch die Stützfläche 23 getragen. Der Führungsstrang 22 der Führungsvorrichtung 20 umfassend die Stützfläche 23 mit den Profilsträngen 222 kann kostengünstig als kanalartiges Kunststoff-Hohlprofil 225, z.B. durch Extrusion hergestellt werden. An der unteren, der Montagefläche 31 zugewandten Seite des Kunststoffprofils 225 ist eine Aufnahme 224 zum Formschluss mit dem Seil 221 ausgebildet. Mittels der Aufnahme 224, passend zum Seil 221, ist das Kunststoff-Hohlprofil 225 gegen eine Verschiebung in der Querrichtung Q gesichert (vgl. FIG.2C).

Im Ausführungsbeispiel nach FIG.2A-2D umfasst die Führungsvorrichtung 20 sowohl das Seil 221 als ersten Führungsstrang für den Untertrum 12 als auch einen zweiten profilartigen Führungsstrang für den Obertrum 14, mit den von der Stützfläche 23 vorstehenden Profilsträngen 222. Hierbei hat die Stützfläche 23 zusätzlich eine tragende Funktion für den Obertrum 14.

Die Führungsvorrichtung 30 in FIG.3A-3C umfasst ebenfalls zwei Führungsebenen 201, 202 mit jeweils zwei parallelen Führungssträngen 32. Im Beispiel nach FIG.3A-3C sind die Führungsstränge 32 nicht seilförmig flexibel, sondern stabförmig starr als Profilstäbe 323 mit jeweils rundem Querschnitt, der in der Längsrichtung L gleichbleibend ist, ausgeführt. Die Profilstäbe 323 können z.B. als im Profil kreisrunde Metallstäbe ausgeführt sein. Jeweils auf der unteren und der oberen Führungsebene 201, 202 befindet sich ein Paar paralleler Profilstäbe 323, die ggf. aus mehreren Längsabschnitten 24 zusammensetzbar sind.

Mindestens jedes n-te Kettenglied 43 der Energieführungskette ist in diesem Beispiel mit einem Paar erster Profilbereiche 318a und einem Paar zweiter Profilbereiche 318b ausgestattet, die an einem Anbaumodul 304 vorgesehen sind. Das Anbaumodul 304 ist in diesem Beispiel, im Unterschied zu FIG.4B, über dem Quersteg 423 an den Schmalseiten 411 der Seitenlaschen 410 befestigt, z.B. durch Rastverbindung. In FIG.3A-3C umfasst das Anbaumodul 304 jeweils zwei Paar Profilbereiche 318a, 318b. Die beiden ersten Profilbereiche 318a sind an der radial äußeren Seite B der Energieführungskette angeordnet und die zweiten Profilbereiche 318b sind den Profilbereichen a abgewandt an der radial inneren Seite A der Energieführungskette angeordnet. Der Abstand der unteren Profilstäbe 323 voneinander in der Querrichtung Q ist gleich dem entsprechenden Abstand der ersten Profilbereiche 318a voneinander, und ein Abstand der oberen Profilstäbe 323 voneinander in der Querrichtung Q ist gleich dem entsprechenden Abstand der zweiten Profilbereiche 318b voneinander.

Jeder Profilbereich 318a, 318b umfasst jeweils eine Vertiefung 19 mit einer halbzylindrischen Innenwandung, ähnlich zu FIG.1-2, koaxial zur Längsrichtung L. Alle Profilbereiche 318a, 318b haben in FIG.3A-3C identischen Querschnitt, sodass identische Profilstäbe 323 verwendbar sind. Beim Verfahren der Energieführungskette 10 gleiten die Trume 12, 14 mit den entsprechenden Profilbereichen 318a, 318b auf den Profilstäben 323 d.h. stehen mit den Führungsstäben 223 in Eingriff, sodass ggf. unterstützt durch das Eigengewicht eine Abweichung der Trume 12, 14 in Querrichtung Q verhindert wird.

Neben der Führungsfunktion können die Profilstäbe 323 gewichtstragend wirkend, d.h. eine Tragfunktion haben. In FIG.3A-3C wird der Obertrum 14 durch die Profilstäbe 323 in der Führungsebene 202 gleitend verfahrbar getragen. Der Obertrum 14 kann dabei durch seine zweiten Profilbereiche 318b auf den Profilstäben 323 der zweiten Führungsebene 202 gleitend abgestützt sein und soz. aufgehängt geführt werden. Die Bauweise und Montage der Führungsstränge 32 aus Profilstäben 323 ist dabei ähnlich einfach wie in FIG.1-2, und insbesondere mit wenigen Einzelteilen schnell ausrichtbar.

FIG.4A zeigt beispielhaft ein Anbaumodul 404 für die Vorrichtung in FIG.1-2, in der Perspektivansicht von der Seite, die dem Profilbereich 18 abgewandt ist. Das Anbaumodul 404 weist einen querstabilisierenden Profilbereich 18 auf, hier in Form einer Vertiefung 19 mit einer habzylindrischen Profilfläche, die im Querschnitt einen Halbkreis formt. Im montierten Zustand am Kettenglied liegt die Zylinderachse der Vertiefung 19 parallel zur Längsrichtung L der Energieführungskette. Ferner weist das Anbaumodul 404 zwei Stützkufen 405 auf, die sich parallel zu der Vertiefung 19 erstrecken. Das Anbaumodul 404 hat eine Rastaufnahme und Rastvorsprünge 407 zum Verrasten mit Schmalseiten 409 eines Querstegs 424b.

FIG.4B zeigt ein Kettenglied 44 einer Energieführungskette 10 gemäß den vorstehenden Figuren. Das Kettenglied 44 umfasst zwei parallele Seitenlaschen 410, die in der Querrichtung Q durch mindestens einen, hier zwei Querstege 424a, 424b miteinander verbunden sind. Die Seitenlaschen 410 und die Querstege 424a, 424b definieren einen Aufnahmeraum 500 zum Führen von Versorgungsleitungen. Die Hauptseiten 413 der Seitenlaschen 410 weisen in FIG.4B jeweils einen an sich bekannten Gelenkbolzen 415a und eine an sich bekannte Gelenkaufnahme 415b für eine Gelenkverbindung mit jeweils zwei weiteren Kettengliedern 44 auf. Auch andere Arten Gelenkverbindungen sind anwendbar. Jede Seitenlasche 410 weist jeweils zwei in der Längsrichtung L erstreckenden Schmalseiten 411 auf, die innerhalb der Leitungsführungseinrichtung 10 der Seite A bzw. der Seite B der Leitungsführungseinrichtung 10 zugewandt sind. Die Querstege 424a, 424b weisen ebenfalls jeweils zwei Schmalseiten 409 auf, die sich entlang der Querrichtung Q erstrecken, und jeweils zwei Hauptseiten 408 auf, die dem Aufnahmeraum 500 zugewandt bzw. abgewandt sind. An der dem Aufnahmeraum 500 abgewandten Hauptseite weist einer der Querstege 424a kammartige Vorsprünge 412 auf, die hier am Quersteg 424a angespritzt sind, oder ggf. mit einem separaten Anbauteil angebracht werden. Der gegenüberliegende andere Quersteg 424b des Kettenglieds 44 weist an seiner dem Aufnahmeraum 500 abgewandten Hauptseite das Anbaumodul 404, wie in der FIG.404 dargestellt, auf, der mit den Schmalseiten 409 des Querstegs 424 verrastet ist. Der Profilbereich 18, die Stützkufen 405, sowie die kammartigen Vorsprünge 412 sind bezüglich des Aufnahmeraums 500 außenseitig am Kettenglied 44 angeordnet und verlaufen in Längsrichtung L des Kettenglieds 44.

### Bezugszeichenliste

- 1: Leitungsführungssystem
- 10: Leitungsführungseinrichtung
- 12: untere Trum
- 13: erste Anschlussstelle
- 14: obere Trum
- 15: zweite Anschlussstelle
- 16: Umlenkbogen
- 17: Befestigungsvorrichtung
- 18, 318a, 318b: Profilbereich
- 19: Vertiefung
- 20, 30: Führungsvorrichtung
- 22, 32: Führungsstrang
- 23: Stützfläche
- 24: Längsabschnitt eines Führungsstrangs
- 31: Montagefläche
- 41, 42, 43, 44: Kettenglied
- 111, 211, 311: Haltefläche
- 201, 202: Führungsebene
- 221: Seil
- 222: angeformte Profilstränge
- 224: Aufnahme
- 225: Kunststoffprofil
- 304, 404: Anbaumodul
- 323: Profilstab
- 405: Stützkufen
- 407: Rastvorsprünge
- 408: Hauptseite eines Querstegs
- 409: Schmalseite eines Querstegs
- 410: Seitenlasche
- 411: Schmalseite einer Seitenlasche
- 412: Kammartige Vorsprung
- 413: Hauptseite einer Seitenlasche
- 415a, 415b: Gelenkbolzen, Gelenkaufnahme
- 421, 422, 423, 424a, 424b: Quersteg
- 500: Aufnahmeraum
- A: der Umlenkachse zugewandte Seite
- B: der Umlenkachse abgewandte Seite
- L: Längsrichtung
- Q: Querrichtung
- H: Höhenrichtung
- U: Umlenkachse
- W: Verfahrweg

## Patentansprüche

1. Leitungsführungssystem (1) umfassend
- eine Leitungsführungseinrichtung (10) zum dynamischen Führen von Versorgungsleitungen, wie Kabeln, Schläuchen oder dgl., von einer ersten zu einer zweiten Anschlussstelle (13, 15), von denen mindestens eine entlang eines Verfahrweges (W) relativ zur anderen verfahrbar ist,
- eine separate Führungsvorrichtung (20; 30) zum Führen der Leitungsführungseinrichtung (10) entlang zumindest einer Teilstrecke des Verfahrweges (W),
wobei die Leitungsführungseinrichtung (10) eine Längsrichtung (L) hat und gelenkig ausgebildet ist, sodass die Leitungsführungseinrichtung (10) umgeschlagen bzw. umgelenkt werden kann, zum Verfahren unter Bildung von zwei gegenüberliegenden Trumen (12, 14) und eines die Trume (12, 14) verbindenden Umlenkbogens (16), der um eine in einer Querrichtung (Q) quer zur Längsrichtung (L) verlaufende Umlenkachse (U) gekrümmt ist, wobei die Leitungsführungseinrichtung (10) eine Energieführungskette ist, die zwei einander gegenüberliegende Stränge aus Seitenlaschen (410) und diese in der Querrichtung (Q) verbindende Querstege (421; 422; 423; 424a, 424b) aufweist, wobei die Seitenlaschen (410) eines Stranges jeweils paarweise miteinander gelenkig, und um eine in der Querrichtung (Q) verlaufende Schwenkachse gegeneinander schwenkbar, verbunden sind,
und die Energieführungskette schwenkbar miteinander verbundene Kettenglieder (41; 42; 43; 44) aufweist, wobei jedes Kettenglied (41; 42; 43; 44) zwei parallele und durch mindestens einen der Querstege (421; 422; 423; 424a, 424b) in der Querrichtung (Q) voneinander beabstandete und miteinander verbundene Seitenlaschen (410) umfasst, wobei die Führungsvorrichtung (20; 30) mindestens einen Führungsstrang (22; 32) umfasst, der zum Vorgeben eines gewünschten Verlaufs der Teilstrecke des Verfahrweges (W) anordenbar ist, und wobei die Leitungsführungseinrichtung (10) außenseitige Profilbereiche (18; 318a; 318b) aufweist, die zum Anliegen an und/oder Aufliegen auf dem Führungsstrang (22; 32) angeordnet und mit einer Profilform für eine querstabilisierende Führung an bzw. auf dem Führungsstrang (22; 32) durch vor- und/oder rückspringendes Ineinandergreifen von Führungsstrang und Profilform gestaltet sind, um einem seitlichen Abweichen der verfahrbaren Leitungsführungseinrichtung (10) in der Querrichtung (Q) beim Verfahren entgegenzuwirken, wobei die Profilbereiche (18; 318a; 318b) an einer Seite der Leitungsführungseinrichtung (10) angeordnet sind, die beim Verfahren der Leitungsführungseinrichtung (10) dem jeweils gegenüberliegenden Trum zugewandt ist, und/oder an einer Seite der Leitungsführungseinrichtung (10) angeordnet sind, die beim Verfahren der Leitungsführungseinrichtung (10) dem jeweils gegenüberliegenden Trum abgewandt ist.

2. Leitungsführungssystem (1) nach Anspruch 1, **dadurch gekennzeichnet, dass** die Profilbereiche (18; 318a; 318b) der Leitungsführungseinrichtung (10) im Querschnitt komplementär, insbesondere konkav, zum Querschnitt des zusammenwirkenden Führungsstrangs (22; 32) ausgebildet sind, insbesondere mit zwei seitlichen Halteflächen (111; 211; 311).

3. Leitungsführungssystem (1) nach Anspruch 1 oder 2, **dadurch gekennzeichnet, dass** zumindest einige der Profilbereiche (18; 318a; 318b) jeweils mindestens eine in der Längsrichtung (L) erstreckte Vertiefung (19) mit einer zylindrischen Innenwand aufweisen, vorzugsweise mit einem teilkreisförmigen Querschnitt.

4. Leitungsführungssystem (1) nach einem der Ansprüche 1 bis 3, **dadurch gekennzeichnet, dass**
- der mindestens eine Führungsstrang (22; 32) linear erstreckt anordenbar ist um einen linearen Verlauf der Teilstrecke vorzugeben und einem Abweichen der Leitungsführungseinrichtung (10) von einem Geradlauf entgegenzuwirken; und/oder
- die Profilbereiche (18; 318a; 318b) an separaten Anbaumodulen (304; 404) vorgesehen sind, welche an der Leitungsführungseinrichtung (10) befestigt sind.

5. Leitungsführungssystem (1) nach einem der Ansprüche 1 bis 4, **dadurch gekennzeichnet, dass** die Führungsvorrichtung (20; 30) einen Längsabschnitt mit dem mindestens einem tragenden Führungsstrang aufweist, der zum Tragen zumindest eines Teils der Last der Leitungsführungseinrichtung (10) angeordnet ist, insbesondere zum Tragen des oberen Trums (14), wobei die Profilbereiche (18; 318a; 318b) vorzugsweise lastübertragend auf dem Führungsstrang aufliegen.

6. Leitungsführungssystem (1) nach einem der Ansprüche 1 bis 5, **dadurch gekennzeichnet, dass** der mindestens eine Führungsstrang entlang der Teilstrecke des Verfahrweges (W) durchgehend, insbesondere einteilig, ausgeführt ist, insbesondere als Seil, Draht, Schnur oder dergleichen bzw. als durchgehender Profilstab bzw. durchgehender Profilstrang, wobei die Führungsvorrichtung (20; 30) vorzugsweise zwei Führungsstränge (22; 32) umfasst, die parallel zueinander montierbar sind.

7. Leitungsführungssystem (1) nach einem der Ansprüche 1 bis 6, **dadurch gekennzeichnet, dass** die Führungsvorrichtung (20) mindestens eine Befestigungsvorrichtung (17) für den Führungsstrang (22) umfasst, und der mindestens eine Führungsstrang (22) in einem betriebsbereiten Zustand zumindest endseitig oder lediglich endseitig durch jeweils eine Befestigungsvorrichtung (17) befestigt ist, vorzugsweise als Seil, Draht, Schnur oder dergleichen zwischen zwei Befestigungsvorrichtungen (17) gespannt ist.

8. Leitungsführungssystem (1) nach einem der Ansprüche 1 bis 7, **dadurch gekennzeichnet, dass** der mindestens eine Führungsstrang (32) aus einer Anzahl separater Längsabschnitte (24) aufbaubar ist, wobei eine Längserstreckung eines Längsabschnitts (24) des Führungsstrangs (32) vorzugsweise jeweils ein Vielfaches der Längserstreckung eines Kettenglieds (43) der Leitungsführungseinrichtung (10) beträgt.

9. Leitungsführungssystem (1) nach einem der Ansprüche 1 bis 8, **dadurch gekennzeichnet, dass** die Führungsvorrichtung (20) zwei Führungsebenen (201; 202) mit in jeder Führungsebene (201, 202) mindestens einem Führungsstrang (22) aufweist.

10. Leitungsführungssystem (1) nach einem der Ansprüche 1 bis 9, **dadurch gekennzeichnet, dass**
- das Leitungsführungssystem (1) Anbaumodule (304; 404) zum Nachrüsten der Energieführungskette mit den Profilbereichen (18; 318a; 318b) umfasst, wobei die Anbaumodule (304; 404) jeweils mindestens einen Profilbereich (18; 318a; 318b) aufweisen und zum Befestigen an einem Quersteg (421; 422; 423; 424a, 424b) und/oder einer Seitenlasche (410) ausgebildet sind, insbesondere mit einem Quersteg (421; 422; 423; 424a, 424b) und/oder mit einer Seitenlasche (410) verrastbar sind; oder dass
- zumindest einige der Querstege und/oder zumindest einige der Seitenlaschen (410) jeweils zumindest einen integrierten Profilbereich (18) zur Zusammenwirkung mit dem Führungsstrang aufweisen, vorzugsweise wobei die Anbaumodule (304; 404) außenseitig an der abgewandten Seite (B) der Energieführungskette angeordnet sind, welche beim Verfahren dem jeweils gegenüberliegenden Trum abgewandt bzw. der Umlenkachse (U) des Umlenkbogens (16) abgewandt ist; wobei vorzugsweise an der abgewandten Seite (B) paarweise seitlich außen vorgesehene Stützkufen (405), insbesondere mit den Anbaumodulen (404) integrale Stützkufen, vorgesehen sind, die in der Querrichtung (Q) voneinander und von den Profilbereichen (18) beabstandet sind.

11. Leitungsführungssystem (1) nach einem der Ansprüche 1 bis 10, **dadurch gekennzeichnet, dass**
die Führungsvorrichtung (30) ein erstes Paar paralleler Führungsstränge in Form von Profilstäben (323) zum Führen des ruhenden Trums (12), und ein zweites Paar paralleler Führungsstränge in Form von Profilstäben (323) zum Führen und Tragen des verfahrbaren Trums (14) aufweist, wobei jeder Trum (12, 14) paarweise und im Querschnitt symmetrisch angeordnete erste Profilbereiche (318a), die dem beim Verfahren jeweils gegenüberliegenden Trum (12, 14) abgewandt sind, und paarweise und im Querschnitt symmetrisch angeordnete zweite Profilbereiche (318b), die dem beim Verfahren jeweils gegenüberliegenden Trum (12, 14) zugewandt sind, aufweist und
wobei die ersten Profilbereiche (318a) mit dem ersten Paar Profilstäbe (323) zusammenwirken und die zweiten Profilbereiche (318b) mit dem zweiten Paar Profilstäbe (323) zusammenwirken.

12. Leitungsführungssystem (1) nach einem der Ansprüche 10 bis 11, **dadurch gekennzeichnet, dass** das Anbaumodul (304) sowohl dem beim Verfahren gegenüberliegenden Trum bzw. der Umlenkachse (U) zugewandte Profilbereiche (318b), als auch dem beim Verfahren gegenüberliegenden Trum bzw. der Umlenkachse abgewandte Profilbereiche (318a) aufweist.

13. Leitungsführungssystem (1) nach einem der Ansprüche 1 bis 12, **dadurch gekennzeichnet, dass** die Führungsvorrichtung (20) mindestens einen als Profilstrang (222) ausgeführten Führungsstrang (22) aufweist, vorzugsweise mit einem Profilquerschnitt, welcher mit den Profilbereichen (18) durch alternierend vor- und rückspringendes Ineinandergreifen zusammenwirkt.

14. Leitungsführungssystem (1) nach einem der Ansprüche 1 bis 13, insbesondere nach Anspruch 13, **dadurch gekennzeichnet, dass** die Leitungsführungseinrichtung (10) an der dem beim Verfahren jeweils gegenüberliegenden Trum zugewandten Seite (A) jedes Trums mehrere in der Längsrichtung (L) erstreckte kammartige Vorsprünge (412) aufweist, um beim Verfahren des einen, oberen Trums (14) auf dem anderen, unteren Trum (12) die kammartigen Vorsprünge (412) der beiden Trume (12, 14) miteinander kämmen zu lassen, um die beiden Trume (12, 14) gegen eine Querverschiebung relativ zueinander bzw. seitlich aneinander zu halten, vorzugsweise wobei
- der beim Verfahren untere Trum (12) geführt ist durch Zusammenwirken eines zugeordneten Führungsstrangs (22), insbesondere durch ein gespanntes Seil oder dgl. (221), mit Profilbereichen (18) die außenseitig angeordnet sind an der abgewandten Seite (B) der Energieführungskette, welche dem jeweils gegenüberliegenden Trum abgewandt ist;
und/oder
- der beim Verfahren obere Trum (12) geführt ist durch Zusammenwirken des als Profilstrang (222) ausgeführten Führungsstrangs (22) mit den kammartigen Vorsprüngen (412).

15. Leitungsführungssystem (1) nach Anspruch 14, **dadurch gekennzeichnet, dass** der als Profilstrang (222) ausgeführte Führungsstrang (22) für das obere Trum auf dem seilartigen Führungsstrang (22) für das untere Trum seitlich gehalten ist.

16. Leitungsführungssystem (1) nach Anspruch 1, wobei die Seitenlaschen (410) des jeweiligen Kettenglieds einander in der Querrichtung (Q) gegenüberliegen, jeweils zwei in der Längsrichtung (L) verlaufende Schmalseiten (411) aufweisen und mit dem mindestens einen diese Seitenlaschen verbindenden Quersteg, insbesondere zwei Querstegen, einen Aufnahmeraum (500) für zu führende Versorgungsleitungen definieren, wobei der jeweilige Profilbereich von dem Aufnahmeraum (500) abgewandt an zumindest einem der Querstege und/oder an zumindest einer der Schmalseiten (411) der jeweiligen Seitenlasche (410) angeordnet ist und eine im Querschnitt zum seil- oder stabförmigen Führungsstrang komplementäre, insbesondere konkave teilzylindrische, Profilform aufweist, vorzugsweise wobei der Profilbereich (18) außenseitig integral mit dem Quersteg (424) geformt, insbesondere angeformt ist, oder als Bestandteil eines separaten Anbaumoduls (304; 404) mit dem Quersteg verrastet ist.

## Claims

1. Line guiding system (1) comprising
- a line guiding apparatus (10) for dynamic guiding supply lines, such as cables, hoses or the like, from a first to a second connection point (13, 15), of which at least one is movable relative to the other along a travel path (W), and
- a separate guiding device (20; 30) for guiding the line guiding apparatus (10) along at least a section of the travel path (W),
wherein the line guiding apparatus (10) has a longitudinal direction (L) and is formed in an articulated manner such that the line guiding apparatus (10) can be turned around or deflected for travel, forming two opposite runs (12, 14) and a deflection curve (16) connecting the runs (12, 14), which is curved about a deflection axis (U) extending in a transverse direction (Q) transverse to the longitudinal direction (L), wherein the line guiding apparatus (10) is an energy chain, which has two mutually opposite strands of lateral link plates (410) and crossbars (421; 422; 423; 424a, 424b) connecting these in the transverse direction (Q), wherein the lateral link plates (410) of a strand are connected to each other in pairs in an articulated manner in each case and pivotably relative to each other about a pivot axis which extends in the transverse direction (Q) and the energy chain has chain links (41; 42; 43; 44) that are connected to each other in a pivoting manner, wherein each chain link (41; 42; 43; 44) has two parallel lateral link plates (410) which are each spaced apart from one another and connected to one another in the transverse direction (Q) by at least one of the crossbars (421; 422; 423; 424a, 424b), **wherein** the guiding device (20; 30) comprises at least one guide strand (22; 32), which is arrangeable for predefining a desired course of the section of the travel path (W), and wherein the line guiding apparatus (10) comprises external profile regions (18; 318a; 318b), which are arranged for lying against and/or on the guide strand (22; 32) and are shaped with a profile shape for transversely stabilizing guiding against or on the guide strand (22; 32) by projecting and/or recessed interengagement of guide strand and profile shape to counteract a lateral deviation of the movable line guiding apparatus (10) in the transverse direction (Q) during travel, wherein the profile regions (18; 318a; 318b) are provided on a side of the line guiding apparatus (10) which, during travel of the line guiding apparatus (10), faces towards the respective opposite run, and/or on a side of the line guiding apparatus (10) which, during travel of the line guiding apparatus (10), faces away from the respective opposite run.

2. Line guiding system (1) according to claim 1, **characterized in that** the profile regions (18; 318a; 318b) of the line guiding apparatus (10) are formed such that they are complementary in cross-section to the cross-section of the interacting guide strand (22; 32), and are in particular concave, in particular with two lateral retaining surfaces (111; 211; 311).

3. Line guiding system (1) according to claim 1 or 2, **characterized in that** at least some of the profile regions (18; 318a; 318b) each have at least one depression (19) extending in the longitudinal direction (L) with a cylindrical inner wall, preferably with an arc-shaped cross-section.

4. Line guiding system (1) according to one of claims 1 to 3, **characterized in that**
- the at least one guide strand (22; 32) is arrangeable such that it extends in a linear manner to define a linear course of the section and to counteract a deviation of the line guiding apparatus (10) from straight running; and/or
- the profile regions (18; 318a; 318b) are provided on separate add-on modules (304; 404), which are fastened to the line guiding apparatus (10).

5. Line guiding system (1) according to one of claims 1 to 4, **characterized in that** the guiding device (20; 30) comprises a longitudinal portion with the at least one supporting guide strand, which is arranged for supporting at least part of the load of the line guiding apparatus (10), in particular for supporting the upper run (14), wherein the profile regions (18; 318a; 318b) are preferably supported on the guide strand in a load-transferring manner.

6. Line guiding system (1) according to one of claims 1 to 5, **characterized in that** the at least one guide strand is configured continuously along the section of the travel path (W), in particular in one piece, in particular as a rope, wire, cord or the like, or as a continuous profile bar or continuous profile strand, wherein the guiding device (20; 30) preferably comprises two guide strands (22; 32), which can be installed parallel to each other.

7. Line guiding system (1) according to one of claims 1 to 6, **characterized in that** the guiding device (20) comprises at least one fastening device (17) for the guide strand (22), and in an operational state the at least one guide strand (22) is fastened at least at its ends or only at its ends by a fastening device (17) in each case, preferably stretched between two fastening devices (17) as a rope, wire, cord or the like.

8. Line guiding system (1) according to one of claims 1 to 7, **characterized in that** the at least one guide strand (32) can be built up from a number of separate longitudinal portions (24), wherein a longitudinal extension of a longitudinal portion (24) of the guide strand (32) preferably amounts in each case to a multiple of the longitudinal extension of a chain link (43) or segment of the line guiding apparatus (10).

9. Line guiding system (1) according to one of claims 1 to 8, **characterized in that** the guiding device (20) comprises two guide planes (201; 202) with at least one guide strand (22) in each guide plane (201, 202).

10. Line guiding system (1) according to one of claims 1 to 9, **characterized in that**
- the line guiding system (1) comprises add-on modules (304; 404) for retrofitting the energy chain with the profile regions (18; 318a; 318b), wherein the add-on modules (304; 404) each have at least one profile region (18; 318a; 318b) and are formed for fastening on a crossbar (421; 422; 423; 424a, 424b) and/or a lateral link plate (410), and in particular are latchable with a crossbar (421; 422; 423; 424a, 424b) and/or with a lateral link plate (410); or **in that**
- at least some of the crossbars and/or at least some of the lateral link plates (410) each have at least one integrated profile region (18) for interaction with the guide strand ,
preferably wherein
the add-on modules (304; 404) are arranged externally on the facing away side (B) of the energy chain, which, during travel, faces away from the opposite run in each case or faces away from the deflection axis (U) of the deflection curve (16); wherein support skids (405) preferably provided laterally in pairs externally on the facing away side (B), in particular support skids that are integral with the add-on modules (404), are provided, which are spaced apart from each other and from the profile regions (18) in the transverse direction (Q).

11. Line guiding system (1) according to one of claims 1 to 10, **characterized in that**
the guiding device (30) comprises a first pair of parallel guide strands in the form of profile bars (323) for guiding the stationary run (12), and a second pair of parallel guide strands in the form of profile bars (323) for guiding and supporting the movable run (14), wherein each run (12, 14) comprises first profile regions (318a) arranged in pairs and symmetrically in cross-section, which, during travel, face away from the opposite run (12, 14) in each case, and second profile regions (318b) arranged in pairs and symmetrically in cross-section, which, during travel, face towards the opposite run (12, 14) in each case, and
wherein the first profile regions (318a) interact with the first pair of profile bars (323) and the second profile regions (318b) interact with the second pair of profile bars (323).

12. Line guiding system (1) according to one of claims 10 to 11, **characterized in that** the add-on module (304) comprises both profile regions (318b) facing, during travel, towards the opposite run or the deflection axis (U), and profile regions (318a) facing, during travel, away from the opposite run or the deflection axis.

13. Line guiding system (1) according to one of claims 1 to 12, **characterized in that** the guiding device (20) comprises at least one guide strand (22) configured as a profile strand (222), preferably with a profile cross-section that interacts with the profile regions (18) by alternating projecting and recessed interlocking.

14. Line guiding system (1) according to one of claims 1 to 13, in particular according to claim 13, **characterized in that** the line guiding apparatus (10) comprises a plurality of comb-like projections (412) extending in the longitudinal direction (L) on the side (A) of each run facing, during travel, towards the opposite run in each case, to allow the comb-like projections (412) of the two runs (12, 14) to mesh with one another during travel of the one, upper run (14) on the other, lower run (12), in order to keep the two runs (12, 14) together against a transverse shift relative to each other or together laterally,
preferably wherein
- the run, which is the lower run (12) during travel, is guided by interaction of an allocated guide strand (22), in particular by a tensioned rope or the like (221), with profile regions (18) that are arranged externally on the facing away side (B) of the energy chain facing away from the opposite run in each case; and/or
- the run, which is the upper run (12) during travel, is guided by interaction of the guide strand (22) configured as a profile strand (222) with the comb-like projections (412).

15. Line guiding system (1) according to claim 14,
**characterized in that** the guide strand (22) for the upper run configured as the profile strand (222) is retained laterally on the rope-like guide strand (22) for the lower run.

16. Line guiding system (1) according to claim 1, wherein the lateral link plates (410) of the respective chain link are opposite each other in the transverse direction (Q), each having two narrow sides (411) extending in the longitudinal direction (L) and, together with the at least one crossbar connecting these lateral link plates, in particular two crossbars, define a receiving space (500) for supply lines to be guided, wherein the respective profile region facing away from the receiving space (500) is arranged on at least one of the crossbars and/or on at least one of the narrow sides (411) of the respective lateral link plate (410) and has a profile shape that is complementary in cross-section to the rope- or bar-like guide strand, in particular a concave, partially cylindrical, profile shape, preferably wherein the profile region (18) is molded integrally with, in particular molded on to, the outside of the crossbar or is latched with the crossbar as a component of a separate add-on module (304; 404).

## Revendications

1. Système de guidage de conduite (1) comprenant
- un dispositif de guidage de conduite (10) pour le guidage dynamique de conduites d'alimentation, tels que des câbles, des tuyaux ou similaires, d'un premier à un deuxième point de raccordement (13, 15), dont au moins un est mobile par rapport à l'autre le long d'une trajectoire de déplacement (W),
- un dispositif de guidage séparé (20; 30) pour guider le dispositif de guidage de conduite (10) le long d'au moins une partie de la trajectoire de déplacement (W),
le dispositif de guidage de conduites (10) ayant une direction longitudinale (L) et étant articulé de manière à pouvoir être rabattu ou dévié pour se déplacer en formant deux parties opposés (12, 14) et un coude de déviation (16) reliant les parties (12, 14), coude qui est courbé autour d'un axe de renvoi (U) s'étendant dans une direction transversale (Q) transversalement à la direction longitudinale (L), le dispositif de guidage de conduite (10) étant une chaîne porte-câbles qui comporte deux brins opposés constitués de pattes latérales (410) et de traverses (421; 422; 423; 424a, 424b) reliant celles-ci dans la direction transversale (Q), les pattes latérales (410) d'un brin étant reliées entre elles par paires de manière articulée et pouvant pivoter les unes par rapport aux autres autour d'un axe de pivotement s'étendant dans la direction transversale (Q), et la chaîne porte-câbles comportant des maillons (41; 42; 43; 44) reliés entre eux de manière pivotante, chaque maillon de chaîne (41; 42; 43; 44) comportant deux pattes latérales (410) parallèles et espacées les unes des autres dans la direction transversale (Q) et reliées entre elles par au moins une des traverses (421; 422; 423; 424a, 424b) dans la direction transversale (Q), le dispositif de guidage (20; 30) comprenant au moins un brin de guidage (22; 32) qui peut être disposé pour prédéterminer un tracé souhaité du tronçon de la trajectoire de déplacement (W), et le dispositif de guidage de conduite (10) comportant des zones profilées extérieures (18; 318a; 318b) qui sont agencées pour s'appuyer contre et/ou reposer sur le brin de guidage (22; 32) et qui sont conçues avec une forme profilée pour un guidage stabilisant transversalement sur le brin de guidage (22; 32) par un engrènement en saillie et/ou en retrait entre le brin de guidage et la forme profilée, afin de contrer une déviation latérale du dispositif de guidage de conduite mobile (10) dans la direction transversale (Q) lors du déplacement, les zones profilées (18; 318a; 318b) étant disposées sur un côté du dispositif de guidage de conduite (10) qui, lors du déplacement du dispositif de guidage de conduite (10), est tourné vers la partie opposée respective, et/ou étant disposées sur un côté du dispositif de guidage de conduite (10) qui, lors du déplacement du dispositif de guidage de conduite (10), est détourné de la partie opposée respective.

2. Système de guidage de conduite (1) selon la revendication 1, **caractérisé en ce que** les zones profilées (18; 318a; 318b) du dispositif de guidage de conduite (10) sont conçues avec une section transversale complémentaire, en particulier concave, à la section transversale du brin de guidage (22; 32) coopérant, en particulier avec deux surfaces de retenue latérales (111; 211; 311).

3. Système de guidage de conduite (1) selon la revendication 1 ou 2, **caractérisé en ce qu'**au moins certaines des zones profilées (18; 318a; 318b) présentent chacune au moins un évidement (19) s'étendant dans la direction longitudinale (L) avec une paroi intérieure cylindrique, de préférence avec une section transversale en forme de cercle partiel.

4. Système de guidage de conduite (1) selon l'une quelconque des revendications 1 à 3, **caractérisé en ce que**
- ledit au moins un brin de guidage (22; 32) peut être disposé de manière linéaire afin de prédéfinir un tracé linéaire du tronçon de la trajectoire et de contrer tout écart du dispositif de guidage de conduite (10) par rapport à un tracé rectiligne; et/ou
- les zones profilées (18; 318a; 318b) sont prévues sur des modules additionnels séparés (304; 404) qui sont fixés au dispositif de guidage de conduite (10).

5. Système de guidage de conduite (1) selon l'une quelconque des revendications 1 à 4, **caractérisé en ce que** le dispositif de guidage (20; 30) comporte une section longitudinale avec au moins un brin de guidage porteur qui est agencé pour supporter au moins une partie de la charge du dispositif de guidage de conduite (10), en particulier pour supporter la partie supérieure (14), les zones profilées (18; 318a; 318b) reposant de préférence sur le brin de guidage de manière à transférer la charge.

6. Système de guidage de conduite (1) selon l'une quelconque des revendications 1 à 5, **caractérisé en ce que** ledit au moins un brin de guidage est réalisé de manière continue, en particulier d'un seul tenant, le long du tronçon de la trajectoire de déplacement (W), en particulier sous la forme d'un câble, d'un fil, d'une corde ou similaire, ou sous la forme d'une barre profilée continue ou d'un brin profilé continu, le dispositif de guidage (20; 30) comprenant de préférence deux brins de guidage (22; 32) qui peuvent être montés parallèlement l'un à l'autre.

7. Système de guidage de conduite (1) selon l'une quelconque des revendications 1 à 6, **caractérisé en ce que** le dispositif de guidage (20) comprend au moins un dispositif de fixation (17) pour le brin de guidage (22), et que ledit au moins un brin de guidage (22) est fixé dans un état opérationnel au moins à son extrémité ou seulement à son extrémité par un dispositif de fixation (17) respectif, de préférence tendu sous forme de câble, de fil, de corde ou similaire entre deux dispositifs de fixation (17).

8. Système de guidage de conduite (1) selon l'une quelconque des revendications 1 à 7, **caractérisé en ce que** ledit au moins un brin de guidage (32) peut être constitué d'un certain nombre de sections longitudinales séparées (24), l'extension longitudinale d'une section longitudinale (24) du brin de guidage (32) correspond de préférence à un multiple de la longueur d'un maillon de chaîne (43) du dispositif de guidage de conduite (10).

9. Système de guidage de conduite (1) selon l'une quelconque des revendications 1 à 8, **caractérisé en ce que** le dispositif de guidage (20) comporte deux plans de guidage (201; 202) avec au moins un brin de guidage (22) dans chaque plan de guidage (201, 202).

10. Système de guidage de conduite (1) selon l'une quelconque des revendications 1 à 9, **caractérisé en ce que**
- le système de guidage de conduite (1) comprend des modules additionnels (304; 404) pour équiper a posteriori la chaîne porte-câbles avec les zones profilées (18; 318a; 318b), les modules additionnels (304; 404) comportant chacun au moins une zone profilée (18; 318a; 318b) et étant conçus pour être fixés à une traverse (421; 422; 423; 424a, 424b) et/ou à une patte latérale (410), en particulier encliquetés avec une traverse (421; 422; 423; 424a, 424b) et/ou avec une patte latérale (410); ou que
- au moins certaines des traverses et/ou au moins certaines des pattes latérales (410) comportent chacune au moins une zone profilée intégrée (18) destinée à coopérer avec le brin de guidage, les modules additionnels (304; 404) étant disposés à l'extérieur sur le côté opposé (B) de la chaîne porte-câbles, côté qui, lors du déplacement, est opposé au brin respectif opposé ou à l'axe de renvoi (U) du coude de renvoi (16); de préférence, des patins de support (405) prévus par paires sur le côté opposé (B), en particulier des patins de support intégrés aux modules additionnels (404), étant prévus, qui sont espacés les uns des autres et des zones profilées (18) dans la direction transversale (Q).

11. Système de guidage de conduite (1) selon l'une quelconque des revendications 1 à 10, **caractérisé en ce que** le dispositif de guidage (30) comporte une première paire de brins de guidage parallèles sous la forme de barres profilées (323) pour guider la partie fixe (12) et une deuxième paire de brins de guidage parallèles sous la forme de barres profilées (323) pour guider et supporter la partie mobile (14), chaque partie (12, 14) comportant des premières zones profilées (318a) disposées par paires et symétriques en section transversale, qui sont détournées de la partie (12, 14) respectivement opposée lors du déplacement, et des deuxièmes zones profilées (318b) disposées par paires et symétriques en section transversale, qui sont tournées vers la partie (12, 14) respectivement opposée lors du déplacement, et les premières zones profilées (318a) coopérant avec la première paire de barres profilées (323) et les deuxièmes zones profilées (318b) coopérant avec la deuxième paire de barres profilées (323).

12. Système de guidage de conduite (1) selon l'une quelconque des revendications 10 à 11, **caractérisé en ce que** le module additionnel (304) comporte à la fois des zones profilées (318b) tournées vers la partie opposée lors du déplacement ou vers l'axe de renvoi (U) et des zones profilées (318a) détournées de la partie opposée lors du déplacement ou de l'axe de renvoi.

13. Système de guidage de conduite (1) selon l'une des revendications 1 à 12, **caractérisé en ce que** le dispositif de guidage (20) comporte au moins un cordon de guidage (22) réalisé sous forme de cordon profilé (222), de préférence avec une section transversale profilée qui coopère avec les zones profilées (18) par un engrènement alterné en saillie et en retrait.

14. Système de guidage de conduite (1) selon l'une quelconque des revendications 1 à 13, en particulier selon la revendication 13, **caractérisé en ce que** le dispositif de guidage de conduite (10) comporte, sur le côté (A) de chaque partie tournée vers la partie opposée lors du déplacement, plusieurs saillies en forme de peigne s'étendant dans la direction longitudinale (L) (412) s'étendant dans la direction longitudinale (L) afin, lors du déplacement de la partie supérieure (14) sur la partie inférieure (12), de faire s'engrener les saillies en forme de peigne (412) des deux parties (12, 14) l'une dans l'autre afin de maintenir les deux parties (12, 14) l'une contre l'autre, de préférence
- la partie inférieure (12) est guidée lors du déplacement par la coopération d'un brin de guidage associé (22), en particulier par un câble tendu ou similaire (221), avec des zones profilées (18) qui sont disposées à l'extérieur sur le côté opposé (B) de la chaîne porte-câbles, qui est détournée de la partie opposée respective;
et/ou
- la partie supérieure (12) est guidé lors du déplacement par l'interaction du brin de guidage (22) réalisé sous forme de brin profilé (222) avec les saillies en forme de peigne (412).

15. Système de guidage de conduite (1) selon la revendication 14, **caractérisé en ce que** le brin de guidage (22) réalisé sous forme de brin profilé (222) pour la partie supérieure est maintenu latéralement sur le brin de guidage (22) en forme de câble pour la partie inférieure.

16. Système de guidage de conduite (1) selon la revendication 1, dans lequel les pattes latérales (410) de chaque maillon de chaîne sont opposées les unes aux autres dans la direction transversale (Q), présentent chacune deux côtés étroits (411) s'étendant dans la direction longitudinale (L) et définissent, avec au moins une traverse reliant ces pattes latérales, en particulier deux traverses, un espace de logement (500) pour les câbles d'alimentation à acheminer, la zone profilée respective étant disposée à l'opposé de l'espace de logement (500) sur au moins l'une des traverses et/ou sur au moins l'un des côtés étroits (411) de la patte latérale respective (410) et présentant une forme de profil complémentaire, en particulier concave, partiellement cylindrique, en section transversale par rapport au brin de guidage en forme de câble ou de tige, de préférence la zone profilée (18) étant formée d'un seul tenant avec la traverse (424) sur le côté extérieur, en particulier moulée, ou étant encliquetée avec la traverse en tant que composant d'un module additionnel séparé (304; 404) avec la traverse.
